# EUROPÄISCHE PATENTSCHRIFT

(11) **EP 1 857 595 B1**
(45) Veröffentlichungstag und Bekanntmachung des Hinweises auf die Patenterteilung: **27.01.2010**
(21) Anmeldenummer: 07400014.2
(22) Anmeldetag: 14.05.2007
(51) Int. Cl.: E02B 3/10

(54) **Verwendung eines multifunktionalen, sensorbasierten Geotextilsystems zur Deichertüchtigung, für räumlich ausgedehntes Deichmonitoring sowie für die Gefahrenerkennung im Hochwasserfall**
Use of a multi-functional, sensor-based geo textile system for dyke improvement, spatial expansion of dyke monitoring for identification of dangers in case of flood
Utilisation d'un système géotextile polyvalent à base de capteur destiné à l'entraînement de digue pour la surveillance d'une digue large tout comme pour la surveillance d'une digue large tout comme pour la détection de risques en cas de chute d'eau

(30) Priorität: 17.05.2006 DE 102006022588
(43) Veröffentlichungstag der Anmeldung: 21.11.2007
(73) Patentinhaber: Sächsisches Textilforschungsinstitut e.V., 09125 Chemnitz (DE)
(72) Erfinder: Krebber, Katarina, 14532 Stahnsdorf (DE); Habel, Wolfgang, 13125 Berlin (DE); Glötzl, Rainer, 76275 Ettlingen (DE); Saathoff, Fokke, 32312 Lübbecke (DE); Thiele, Elke, 09125 Chemnitz (DE); Arnold, Rolf, 01257 Dresden (DE)
(74) Vertreter: Steiniger, Carmen

(56) Entgegenhaltungen:
- EP-A1- 1 213 393
- DE-A1- 4 311 947
- DE-A1- 19 746 052
- DE-U1- 29 620 261
- JP-A- 11 304 549

## Beschreibung

Die Erfindung betrifft die Verwendung eines multifunktionalen sensorintegrierten Geotextilsystems zur klassischen Deichertüchtigung und zum Deichmonitoring. Dabei detektiert das Monitoringsystem mögliche Schwachstellen im Deich, die Messsignale (Temperatur- und Verformungsmesswerte) werden an beliebigen Stellen am Deich erfasst und zur Auswertung an eine zentrale Erfassungsstelle über Funk gesendet. Die Messwerterfassung kann kontinuierlich oder zu ausgewählten Zeitpunkten erfolgen.
Das erfindungsgemäße Geotextilsystem eignet sich besonders zum Einsatz bei
- kritischen Durchfeuchtungen bei lang anhaltendem Hochwasser im Binnenland,
- Setzungen von Binnen- und Küstendeichen (auch über lange Zeiträume),
- Belastung und Erosion der Deichaußenböschung im Küstenbereich.

### Problemumfeld und Motivation

Bezüglich Deichzustandsanalyse wird bis heute fast ausschließlich eine visuelle oberflächige Deichinspektion, z.B. durch Deichläufer, durchgeführt. Im Hochwasserfall ist diese Inspektionsmethode, wenn überhaupt, dann nur mit hohem personellem Aufwand realisierbar. Deshalb ist eine rechtzeitige, gezielte Deichunterstützung im Krisenfall oft nicht möglich. Verfügbare Messsysteme werden selten und im Deich meist nur lokal eingesetzt. Sie sind bezüglich Materialkosten und Installation teuer.
Für die unterschiedlichen "IST"-Zustände, die Deiche unter verschieden Einflüssen einnehmen können, gibt es bisher keine großflächigen Inspektions- bzw. Monitoringsysteme. Dabei sind vor allem im Fall eines Hochwassers Kenntnisse über folgende Deichzustände von besonderem Interesse:
- Setzungsverhalten/ Stabilität
- Durchfeuchtung.

### Stand der Technik

Für die Deichsanierungen werden derzeit meist Geotextilien und geosynthetische Tondichtungsbahnen ohne Sensoren oder Überwachungsfunktion eingesetzt. Diese können nichtfilterstabile Bodenschichten erosionssicher verbinden oder als wasserseitige Dichtung eingesetzt werden, können aber nicht für ein Deichmonitoring genutzt werden.
In DE 195 06 180 C1 und DE 295 21 732 U1 wird ein Verfahren und eine Vorrichtung beschrieben, die eine Kontrolle und Überwachung des Zustandes von Deichen, Dämmen und Wehren auf der Basis einer verteilten Temperaturmessung mittels eines faseroptischen, mit Laserstrahlung beaufschlagten Sensorkabels und einer Laufzeit- und Intensitätsauswertung der rückgestreuten Laserstrahlung (Raman-Streuung) ermöglicht. Bei einer festgestellten Anomalie in der Temperaturverteilung wird auf eine Deichleckage geschlossen und der Ort dieser Anomalie ist bestimmbar. Eine verteilte Messung mechanischer Verformungen ist mit diesem Messverfahren nicht möglich.
Um Senkungsgebiete zu stabilisieren und zu überwachen, werden von der Firma Glötzl Geomatten mit integrierten Drahtsensoren eingesetzt, wie in DE 296 20 261 U1 beschrieben. Diese Sensortechnik liefert nur eine integrale Information ohne die nähere lokale Ortung des Schadens, und ist zudem blitzempfindlich.
Optische Fasern als Verformungssensoren in Geotextilien werden von der Firma Polyfelt (www.polyfelt.com) mit dem Produkt "Geodetekt" angeboten. Dieser Geokunststoff basiert auf den so genannten Faser-Bragg-Gitter-(FBG)-Sensoren. Diese sind Kettensensoren, die an bestimmten lokalen Stellen in die Faser eingeschrieben werden können und eine Messlänge von wenigen Millimetern besitzen. Derartige punktuell messende FBG-Sensoren bieten keine ausreichend zuverlässige Information über großflächig verlegte Geomatten, da diese Sensoren nur lokale Informationen über das mechanischen Verhalten liefern und daraus eben nicht auf das Verformungsverhalten großer Messabschnitte geschlossen werden kann. Eine großflächige Überwachung würde eine Vielzahl kostenintensiver FBG-Sensoren in der Textilfläche erfordern. Mit den Geodetekt-Matten wurden bisher Messstrecken von einigen 10 Metern realisiert. Das Geotextil ist daher nur zur Überwachung von Bauwerken kleiner räumlicher Ausdehnung, wie Brücken, Tunnel, Stützkonstruktionen, geeignet.

Die Druckschrift JP 11304549 offenbart einen Sensor zum Feststellen einer Bewegung von Erde und Sand in einem Deich.

Hierfür wird vorgeschlagen, ein optisches Faserkabel, das heißt einen Liniensensor, längs in einem Deich zu verlegen und das Faserkabel in kontinuierlichen Abständen jeweils mit einem Gewicht zu belasten, welches sich bei einer Erd- oder Sandbewegung nach unten bewegt und damit das optische Faserkabel mit nach unten zieht. Man geht hierbei davon aus, dass dann, wenn die Gewichte nicht vorgesehen werden, sich das optische Faserkabel bei einer Erd- oder Sandbewegung nicht mit bewegen, wird sondern in seiner ursprünglichen eingebetteten Position bleiben wird. Dies soll durch die Gewichte verhindert werden, weiche sich in jedem Fall bei einer Erd- oder Sandbewegung mit dieser Bewegung mit bewegen werden.

Das in der Druckschrift JP 11304549 verwendete optische Faserkabel ist lediglich durch eine Schutzschicht bedeckt und nicht anderweitig eingebettet.

Zur Auswertung der Spannungsverteüung in der optischen Faser wird das durch Brillouinstreuung rückgestreute Licht der optischen Faser verwendet. Da in der Druckschrift JP 11304549 jedoch nur ein linienförmiges sensitives Element verwendet wird, ist hiermit keine flächige Deicheiberwachung möglich.

Die Druckschrift DE 296 20 261 U1 beschreibt eine Vorrichtung zur Überwachung von Bodensetzungen, insbesondere unter Gleisanlagen. Hierfür soll eine Vielzahl paralleler erster Leitungen und eine Vielzahl paralleler zweiter Leitungen im Erdboden verlegt werden, wobei die ersten und zweiten Leitungen beispielsweise im rechten Winkel zueinander verlaufen können. Bei den Leitungen kann es sich um optische und/oder elektrische Leiter handeln.

Bei dem in der Druckschrift DE 296 20 261 U1 beschriebenen Einsatzgebiet, wie dem Gleis- oder Straßenbau, werden Geotextilien nur zur Filtration und Drainage, aber nicht zur Bewehrung eingesetzt.

Um die Leitungen in bestimmter Ausrichtung und in bestimmtem Verlauf in den Untergrund einbringen zu können, wird weiter vorgeschlagen, die Leitungen zunächst werkstattseitig in einen Träger, wie beispielsweise ein Gewebe oder ein Vlies, einzuarbeiten. Das mit den eingewebten bzw. eingearbeiteten Leitungen versehene Vlies kann dann zum Einbau in den Untergrund auf einem vorbereiteten Erdplanum ausgelegt werden, wobei sichergestellt ist, dass die Leitungen ihre vorbestimmte Lage und Ausrichtung einnehmen.

Das in der Druckschrift DE 296 20 261 U1 beschriebene Messverfahren basiert darauf, dass im Falle der Verwendung von Lichtleitern die Lichtmenge gemessen wird, die nach Durchlaufen einer Leitung an deren Ende austritt. Wenn sich örtlich übermäßige Setzungen des Untergrundeseinstellen, unterliegen die in dem Bereich der Setzungen angeordneten Leitungen einer Durchbiegung, wodurch die Lichtverluste erhöht werden. Die Abnahme der Lichtintensität am Austrittsende der betroffenen Leitungen kann erfasst werden, wobei durch Zuordnung der betroffenen ersten und zweiten Leitungen die Koordinaten des Setzungsbereiches ermittelt werden können.

### Aufgabe und Lösungsansatz

Es besteht die Notwendigkeit, ein solches Messmittel in ein Geotextil zu integrieren, dass ein kontinuierlich verteiltes Deichmonitoring möglich ist, eine höhere Genauigkeit bei der Lokalisierung des Schadensortes erzielt werden kann und dies kostengünstig in ein Verfahren sowie einer Vorrichtung zum Bewehren von Deichen umzusetzen. Ferner sollen Deiche bzw. Bauwerke großer räumlicher Ausdehnung (Längen von einigen 100 m bis zu einigen Kilometern) überwacht werden. Dies kann durch in Geotextilflächen integrierte, einfache handelsübliche Singlemode-Glasfasern erzielt werden, wie sie auch in der Telekommunikation zur Anwendung kommen. Unter Nutzung der nichtlinearen (stimulierten) Brillouin-Streuung in optischen Fasern sind mechanische Verformungen (Dehnung) und auch Temperaturänderungen durch das sensorbasierte Geotextilsystem kontinuierlich verteilt erfassbar und damit eine Überwachung bezüglich Deichdurchfeuchtung, Deichsetzung, Belastung und Erosion der Deichaußenböschung realisierbar. Die Messsignale werden durch die Geotextilsystemfläche erfasst und über Sender an eine Erfassungsstelle gesendet. Darüber hinaus übernimmt das Geotextilsystem auch die traditionelle Bewehrungsfunktion.
Gegenüber den lokalen FBG-Sensoren werden in der Erfindung nichtlineare Lichtstreueffekte in räumlich ausgedehnten Sensorfasern (stimulierte Brillouin-Streuung) für eine kontinuierlich verteilte Messung mechanischer und physikalischer Größen (Dehnung, Temperatur) unter Einsatz leistungsstarker Laser genutzt. Die optische Faser arbeitet hierbei in ihrer gesamten Länge als Dehnungs- und Temperatursensor.
Die stimulierte Brillouin-Streuung (SBS) basiert auf einer induzierten Rückstreuung von Licht an Schallwellen im optischen Fasermaterial. Die dabei entstehende Frequenzverschiebung der Rückstreuung hängt unter anderem von der Schallgeschwindigkeit ab. Da Temperatur- und Dehnungsänderungen entlang der Faser die Schallgeschwindigkeit verändern, kann über mehrere Kilometer durch Messung der Brillouin-Frequenzverschiebung eine auftretende Dehnungsänderung in der Faser erfasst werden. Da diese Brillouin-Frequenzverschiebung ortsauflösend gemessen werden kann, kann das Dehnungsprofil der gesamten Faserstrecke ermittelt werden. Eine verteilte Messung mechanischer Größen ist nur auf der Basis der Brillouin-Streuung möglich.

### Lösung

Gelöst wird die Aufgabe durch die im Patentanspruch 1 angegebenen Merkmale. Vorteilhafte Ausgestaltungen sind in den Unteransprüchen enthalten.

### Vorteile der Lösung

Die optischen Fasern können als Sensoren in ein Geotextil, vorzugsweise in Viesraschelgewirke, in einem Arbeitsgang integriert werden. Die Erfindung ist folgendermaßen charakterisiert:
- die optischen Fasern werden zum Schutz vor Überbeanspruchungen mit Materialien wie Aramid oder Glasfasern mittels KEMAFIL-Verfahren ummantelt und dann in die Geotextilfläche integriert,
- die optischen Fasern werden zur rechten Gewirkeseite durch Vliesstoff geschützt,
- die optischen Fasern werden zur linken Gewirkeseite durch Bindungselemente der Grund- und Schussfäden geschützt,
- zum Schutz der optischen Fasern erfofgt die Einbettung der Fasern im textilen Herstetlungsprozess der Geotextilfläche zwischen zwei Vliesstoffbahnen oder anderen Geokunststoffbahnen,
- die optischen Fasern werden in Herstellungsrichtung oder in Querrichtung des Geotextiles eingearbeitet,
- die optischen Fasern sind nach dem Einarbeiten geringfügig länger als die Texfilstruktur, d.h. sie weisen eine Materialreserve auf,
- die optischen Sensorfasern können bei der Verwendung des erfindungsgemäßen Geotextilsystems Glasfasern mit speziellen Anordnungen der optischen Kernbereiche oder der Brechzahlprofile sein.

Eine gravierende Erhöhung der Deichsicherheit wird erreicht, wenn bei Deichsanierungen multifunktionale Geotextilien mit integriertem Sensorsystem zum Einsatz kommen. Dieses Geotextilsystem kann die gewünschte Deichertüchtigung erbringen und gleichzeitig die unterschiedlichen Zustände des Deiches erfassen.

Darüber hinaus können im Hochwasserfall Schadensorte kontinuierlich angezeigt werden und im normalen Belastungszustand eine periodisch aktivierbare Online-Deichüberwachung ermöglicht werden. Die gemessenen Daten über die Deformation der Textilstruktur (und damit die Deichverformung) werden in Messstationen, die über großen Strecken entfernt voneinander installiert werden können, erfasst und registriert.

Die erfindungsgemäße Lösung überwindet die Nachteile einer nur lokal auf bestimmte Bereiche begrenzten Messwerterfassung mittels FBG-Sensoren, wie beispielsweise bei dem Produkt "Geodetekt", und vermeidet somit den Einbau einer Vielzahl von teuren Kettensensoren. Die Kosten pro Messstelle werden dadurch erheblich reduziert. Darüber hinaus wird mit der Erfindung nicht nur auf das Setzungsverhalten von Erdmassen erfasst, sondern auch Erosion.
Durch den Einsatz dieses innovativen Messverfahrens, vorrangig auf Basis kommerziell erhältlicher Glasfasern, die in Geotextilflächen integriert sind, können somit über kilometerlange Messstrecken genaue IST-Zustände des Deiches erfasst werden.
Der Einsatz von verhältnismäßig günstigen und in der Baupraxis eingeführten Geokunststoffen in Kombination mit einer effizienten Monitoringtechnik bietet für die o. g. Deichverstärkungsmaßnahmen einen erheblichen Vorteil gegenüber derzeitigen Überwachungs- und Sanierungskonzepten.
Mit dem Einsatz der entwickelten multifunktionalen Geokunststoffe mit integrierten optischen Sensorfasern sind folgende entscheidende Vorteile verbunden:
- das erfindundungsgemäße Geotextilsystem dient der Detektion und dem kontinuierlich flächigem Monitoring von mechanischer Verformung, Setzung, Erosion, Temperaturänderung und Durchfeuchtung im Deich,
- mehrere Geotextilsystem können hintereinander angeordnet und zu einer Meßeinheit von einigen Kilometern Länge zusammengeschaltet werden.
- Möglichkeit eines Deichmonitorings zu beliebigen Zeitpunkten
- Frühzeitige Gefahrenerkennung und Abwehr durch automatische Schwachstellenanalyse und Erfassung einer Schädigungszunahme
- Automatisierte Sammlung von flächendeckenden - nicht nur lokalen oder linienförmigen - Informationen (Schadenskartierung)
- Beobachtung von kurzfristigen und langfristigen Veränderungen (Setzungen, Erosion, Durchsickerung) des Deichs mit nur einem Monitoringsystem
- geringer Personalaufwand durch automatisierte (bei Bedarf auch permanente) Überwachung sehr großer Deichstrecken
- Verwendung kommerziell erhältlicher, preiswerter Standard-Glasfasern als Sensorfasern
- ökonomische Vorteile durch den Einsatz einer Kombination aus stabilisierendem Geotextil und Messmittels in einem System
- keine gravierende Störung der Deichbautechnologie, da Deichbewehrung und Monitoringsystem in einem Arbeitsschritt in den Deich eingebaut werden
- Kombinierbarkeit unterschiedlicher Geokunststoffkonstruktionen (mit oder ohne Sensorfasern, mit unterschiedlicher Anordnungsdichte von Sensorfasern im Geokunststoff) entsprechend vorliegender Deichart und zu erwartender Belastungsfälle.

### Ausführungsbeispiele

Die Erfindung wird nachfolgend durch Ausführungsbeispiele näher beschrieben. Das erfindungsgemäße Geotextil besteht aus einer Textilstruktur mit integrierten Sensorfasern, je nach Verwendung der Sensormatte kann diese eine unterschiedliche Grundstruktur besitzen, in der die Sensorfasern verschiedenartig eingebunden sind.

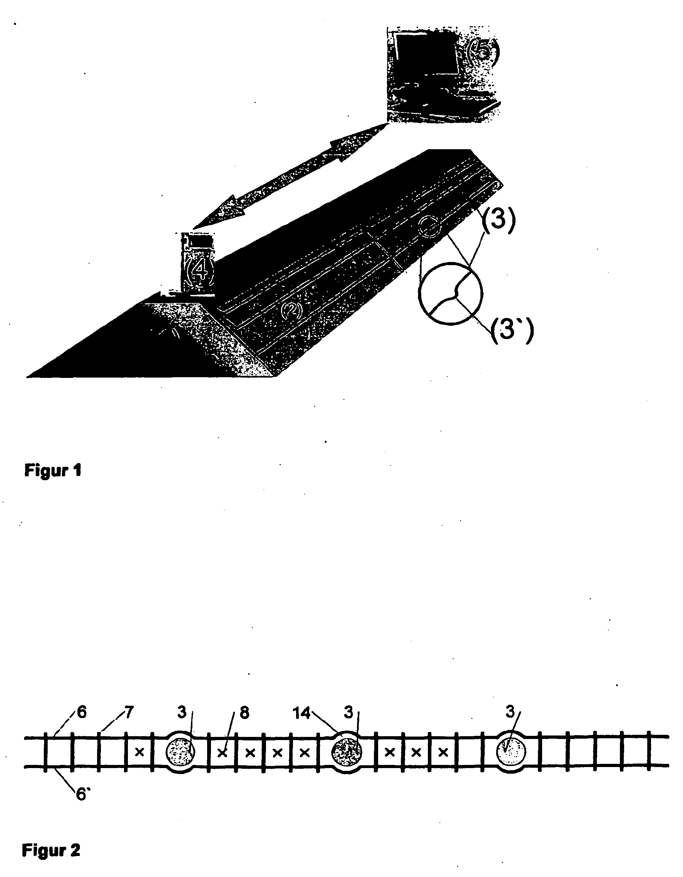

Die dazugehörige Zeichnung 1 zeigt die prinzipielle Funktionsweise, wobei ein Deich (1) mit einem Geotextil (2) verstärkt wird, in welches Sensorfasern (3) integriert wurden. Die kritische Deformation (3') der Sensorfaser wird von dem Meß- und Auswertegerät (4) verarbeitet, welches mit der Überwachungszentrale (5) kommuniziert. Die Ergebnisse werden über Funk an die entsprechen Stellen weitergeleitet.

Die Zeichnung 2 zeigt den Aufbau der textilen Struktur zur Einbettung der Sensorfaser (3) zwischen zwei Vliesstoffschichten (6, 6') als Schnittdarstellung. Für einen optimalen Schutz der Sensorfasern (3) ist es vorteilhaft, diese zwischen zwei Vliesstoffschichten (6, 6') im Bereich von Vliesstoffkanälen (14) einzubetten. Die Verbindung (7) der Vliesstoffschichten oder Faservliesen kann in bekannter Weise durch Vernadeln, Wirken, durch hydrodynamische Verfestigung oder thermische Verfestigung erfolgen. Je nach Deformationsneigung der Sensorfasern, kann es auch vorteilhaft sein, zusätzliche Zugelemente (8) aus dehnungsarmen Fasern sowie Querschussfäden (9) zur Lastaufnahme einzubringen, um insbesondere beim Verlegen der Geotextilbahn eine Beschädigung der Sensorfaser zu vermeiden.

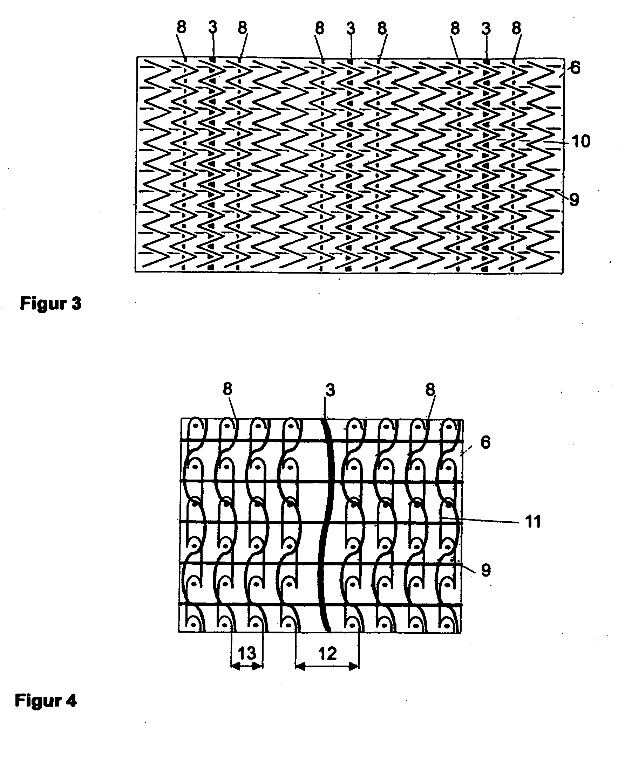

Zeichnung 3 zeigt als Draufsicht auf die linke Warenseite den Strukturaufbau einer beispielhaften Ausführungsvariante bei Verwendung von nur einer Vliesstoffschicht und die Abbindung der Sensorfasern durch die Unterlegungen einer Trikotbindung.

Die Struktur nach Zeichnung 3 wird als biaxial bewehrter Vliesstoff hergestellt. Die Vliesstoffschicht (6) wird in Längsrichtung durch die gestreckt verlaufenden Fäden (8), die als Zugelemente wirken und in Querrichtung durch Last-aufnehmende Querschußfäden (9) verstärkt. Die Sensorfasern (3) werden als Stehschuss eingearbeitet und von den Unterlegungen der Trikotbindung (10) abgebunden. Die Sensorfasern laufen dabei geringfügig länger ein als die gestreckt zugeführte Vliesstoffbahn um für normale Belastungsfälle der Geotextilie für den Sensor eine Dehnungsreserve zu schaffen und den Sensor im normalen Gebrauch der Fläche nicht zu schädigen.

Zeichnung 4 zeigt einen weiteren Strukturaufbau mit nur einer Vliesstoffschicht und einer Abbindung der Sensorfasern durch die Querfäden. Die in Längsrichtung (Herstellungsrichtung) verlaufenden Zugelemente (8) sowie Querschussfäden (9) werden von den Unterlegungsabschnitten (11) der Fransenlegung auf der Vliesstoffschicht (6) befestigt. In dem Bereich (12) ist der Abstand der Wirkmaschenstäbchen (13) vergrößert. Die Sensorfasern (3) werden in Richtung linker Bindungsseite von den Querschußfäden (9) abgebunden. Die Sensorfasern (3) laufen im Bereich (12) mit einer geringen "Überlänge" in das Gewirke knickfrei ein.

## Patentansprüche

1. Verwendung eines. Geotextilsystems, bestehend aus einem textilen Flächengebilde und darin integrierten optischen Fasern, **dadurch gekennzeichnet, dass** dieses gleichzeitig zur Deichbewehrung und zur kontinuierlich verteilten Messung mechanischer und physikalischer Größen ohne geometrische Einschränkungen genutzt werden kann, wobei dass Messverfahren auf der Nutzung der nichtlinearen stimulierten Britiouin-Streuung in optischen Fasern basiert.

2. Verwendung eines Geotextilsystems nach Anspruch 1, **dadurch gekennzeichnet, dass** das textile Flächengebilde aus zwei Vliesstoffschichten (6, 6') besteht zwischen denen Sensorfasern (3) und Zugelemente (8) eingebettet sind, wobei die Verbindung der Schichten (6, 6') durch bekannte Vliesstoff-Vertigungsverfahren, vorzugsweise dem Raschelverfahren erfolgt.

3. Verwendung eines Geotextilsystem nach Anspruch 1, **dadurch gekennzeichnet, dass** das textile Flächengebilde ein Verbund-Raschelgewirke ist, wobei die Sensorfasern (3) in Vliesstofflcanälen eingebettet sind, die in Längsrichtung verlaufen.

4. Verwendung eines Geotextilsystems nach Anspruch 1, **dadurch gekennzeichnet, dass** das textile Flächengebilde ein Verbund-Raschelgewirke aus A) einer oder mehreren Vliesstoffschichten (6) mit integrierten Zugelementen (8) in Längsrichtung, B) Querschussfäden zur Lastaufnahme und C) in Längsrichtung verlaufenden Sensorfasern (3) besteht, wobei die Elemente (3), (8) und (9) durch Unterlegung (10) einer Trikotbindung abgebunden sind.

5. Verwendung eines Geotextilsystems nach Anspruch 2, **dadurch gekennzeichnet, dass** die Sensorfasern (3) in Richtung linker Bindungsseite durch die Querschussfäden (9) beweglich eingebunden sind, wobei die in Längsrichtung verlaufenden Einbindebereiche (12) größer als die normalen Abstände der Wirkmaschenstäbchen (13) sind.

6. Verwendung eines Geotextilssystems nach einem der Ansprüche 1 bis 5, **dadurch gekennzeichnet, dass** das textile Flächengebilde aus organischen Materialien, vorzugsweise Polyester, Polyamid, Polyurethan und/oder anorganischen Materialien vorzugsweise Aramid oder Glasfaser gefertigt ist.

7. Verwendung eines Geotextilsystems nach einem der Ansprüche 1 bis 6, **dadurch gekennzeichnet, dass** die optischen Sensorfasern handelsübliche Singlemode-Glasfasern sind.

8. Verwendung eines Geotextilsystems nach einem der Ansprüche 1 bis 7, **dadurch gekennzeichnet, dass** die optischen Sensorfasern unter Ausnutzung der stimulierten Brillouin-Streuung zur Messung physikalischer Größen geeignet sind.

## Claims

1. Use of a geotextile system consisting of a textile fabric with integrated optical fibres **characterized in that** it can be used with no geometric restrictions both for dike reinforcement and continuously distributed measurement of mechanical and physical variables wherein the measuring method is based on the utilization of the nonlinear stimulated Brillouin scattering in optical fibres.

2. Use of a geotextile system in accordance with Claim 1 **characterized in that** the textile fabric consists of two layers of nonwovens (6, 6') between which sensor fibres (3) and strength elements (8) are embedded wherein the layers (6,6') are bonded by known nonwoven bonding techniques, preferably the Raschel technique.

3. Use of a geotextile system in accordance with Claim 1 **characterized in that** the textile fabric is a bonded Raschel warp-knitting wherein the sensor fibres (3) are embedded in nonwoven fabric channels running in a longitudinal direction.

4. Use of a geotextile system in accordance with Claim 1 **characterized in that** the textile fabric is a composite Raschel warp-knitting consisting of A) one or several layers of nonwovens (6) with integrated strength elements (8) in longitudinal direction, B) transverse weft threads for load absorption and C) sensor fibres (3) running in longitudinal direction wherein the elements (3), (8) and (9) are interlaced by the underlap (10) of a tricot pattern.

5. Use of a geotextile system in accordance with Claim 2 **characterized in that** the sensor fibres (3) are flexibly bonded in the direction of the left-hand bonding side by the transverse weft threads (9) wherein the lacing areas (12) running in longitudinal direction are larger than the normal distances of the wales (13).

6. Use of a geotextile system in accordance with one of the Claims 1 through 5 **characterized in that** the textile fabric is made of organic materials, preferably polyester, polyamide, polyurethane, and/or inorganic materials, preferably aramid or glass fibre.

7. Use of a geotextile system in accordance with one of the Claims 1 through 6 **characterized in that** the optical sensor fibres are commercially available single-mode glass fibres.

8. Use of a geotextile system in accordance with one of the Claims 1 through 7 **characterized in that** the optical sensor fibres are suitable to measure physical variables by utilizing the stimulated Brillouin scattering.

## Revendications

1. Application d'un système de géotextiles qui consiste en une nappe textile de grande surface contenant des fibres optiques, le système étant **caractérisé en ce qu'**il sert à la fois au renforcement de digues et à la mesure continue de grandeurs mécaniques et physiques, le tout sans entraîner aucune restriction géométrique, la méthode de mesure se basant sur l'utilisation de la diffusion de Brillouin non linéaire dans les fibres optiques.

2. Application d'un système de géotextiles suivant la revendication 1, le système étant **caractérisé en ce que** la nappe textile est composée de deux couches de non-tissé (6, 6'), entre lesquelles sont incorporées des fibres fonctionnant en tant que capteurs (3) et des éléments de traction (8), la liaison entre ces couches (6,6') étant assurée par l'un des procédés de solidification de non-tissés, de préférence par le procédé Rachel.

3. Application d'un système de géotextiles suivant la revendication 1, le système étant **caractérisé en ce que** la nappe textile est un produit tricoté sur métier chaîne Rachel, les fibres fonctionnant en tant que capteurs (3) étant incorporées dans des canaux de non-tissé qui, eux, sont disposés en sens longitudinal.

4. Application d'un système de géotextiles suivant la revendication 1, le système étant **caractérisé en ce que** la nappe textile est un produit tricoté sur métier chaîne Rachel contenant A) : une ou plusieurs couches de non-tissé (6) avec des éléments de traction (8) disposés en sens longitudinal, B) : des fils de trame oblique pour soutenir la charge, et C) : des fibres fonctionnant en tant que capteurs (3) disposées en sens longitudinal, le filage des éléments (3), (8) et (9) étant assuré par l'insertion (10) d'une armure double-lisse.

5. Application d'un système de géotextiles suivant la revendication 2, le système étant **caractérisé en ce que** les fibres fonctionnant en tant que capteurs (3) qui vont vers la gauche de l'armure sont disposées, moyennant les fibres de trame oblique (9), de façon mobile, et que la surface couverte par les zones de ficelage disposées en sens longitudinal (12) est plus grande que les écarts standards entre les colonnes de maille (13).

6. Application d'un système de géotextiles suivant l'une des revendications 1 à 5, le système étant **caractérisé en ce que** la nappe textile est fabriquée en matériaux organiques, de préférence en polyester, polyamide, polyuréthane, et/ou en matériaux anorganiques, de préférence en aramide ou fibre de verre.

7. Application d'un système de géotextiles suivant l'une des revendications 1 à 6, le système étant **caractérisé en ce que** les fibres optiques fonctionnant en tant que capteurs sont des fibres de verre monomodes telles qu'elles sont disponibles sur le marché.

8. Application d'un système de géotextiles suivant l'une des revendications 1 à 7, le système étant **caractérisé en ce que** les fibres optiques fonctionnant en tant que capteurs permettent, en utilisant les effets de la diffusion de Brillouin stimulée, la mesure de grandeurs physiques.
